# EUROPEAN PATENT APPLICATION

(11) **EP 4 523 995 A1**
(43) Date of publication of application: **19.03.2025**
(21) Application number: 24200167.5
(22) Date of filing: 13.09.2024
(51) Int. Cl.: B62D 1/10, H02J 9/00, B63H 25/02, B63H 20/12

(54) **SYSTEM FOR THE TRANSMISSION OF ENERGY AND DATA FOR STEERING WHEELS OF BOATS**

(30) Priority: 14.09.2023 IT 202300018936
(71) Applicant: ULTRAFLEX S.P.A., 16015 Casella (GE) (IT)
(72) Inventor: Gai, Pietro, 16015 Casella (GE) (IT); Gai, Marcella, 16015 Casella (GE) (IT); Milanese, Andrea, 16015 Casella (GE) (IT)
(74) Representative: Bottino, Giovanni

(57) **Abstract**

System for the transmission of energy and data for vessel steering wheels, comprising a first part (12) mounted integral with the dashboard (1) of the vessel and a second part (22) mounted integral with the steering wheel, said first part (12) comprising first transmission means connected to a power source (31) mounted on board the vessel.

The second part (22) comprises second transmission means connected to a system for exploiting the energy and data transmitted, the first and second transmission means being configured to transmit the electric current from the power source (31) to the exploitation system.

There are also means for detecting (33) the voltage of the power source (31) and/or of the current absorbed by said exploitation system, there being provided a first control unit (13) comprising first switch means (11) configured to activate/deactivate the connection of the first transmission means to the power source (31), which switch means (11) are operated on the basis of the value detected by the detection means (33) .

## Description

The present invention relates to a System for the transmission of energy and data for vessel steering wheels, comprising a first part mounted integral with the dashboard of the vessel and a second part mounted integral with the steering wheel.

The first part comprises first transmission means connected to a power source mounted on board the vessel, while the second part comprises second transmission means connected to a system for exploiting the energy and data transmitted.

Further, the first and second transmission means are configured to transmit the electric current from the power source to the exploitation system.

It should be specified that the first part can be integral with the dashboard or the wheelhouse, that is, it has no relative movement with respect to the dashboard.

The one just disclosed is the common configuration used in the systems mounted on board vessels for the transmission of electrical energy.

Generally, these systems are used to make heated steering wheels, that is, steering wheels in which the handle is heated, thanks to the presence of resistive elements embedded in the handle that generate heat if traversed by current.

Examples of solutions known to the state of the art are disclosed in documents US20190084502, US20090224523 and IT102013902128136.

The installation of energy and data transmission systems in the nautical field, i.e. on vehicles such as vessels or similar, involves specific problems of the marine environment.

First of all, it is necessary to use electronic components, in an aggressive environment, such as the marine environment, in which the salt causes the corrosion of the metals constituting these electronic components.

The salt spray, formed by dispersions of salt water in the air, manages to creep inside interstices, even the small ones.

Insulating metal parts is therefore a crucial factor for energy transmission systems mounted on board vessels, a feature which, however, is in contrast to the need to provide for moving parts, such as the rotation of the steering wheel with respect to the dashboard, where the electronic parts must interface and cannot be completely insulated.

In addition, in vessels known to the state of the art, a particularly important factor is the protection of the power battery(ies), which also provide(s) power supply to the energy transmission systems.

In fact, it is essential that these energy transmission systems do not excessively overload the battery, compromising its operation for essential functions such as starting the propulsion engines.

At the moment there are no energy and data transmission systems on the market that can be installed on board vessels and that are particularly efficient, without their operation impacting on further essential functions of the vessel.

There is therefore a need not met by the systems known to the state of the art to make an energy transmission system that solves the disadvantages set out above, that is, which can be installed efficiently on board vessels, avoiding that the aggressive environment impairs their operation and without compromising the charging quality of the vessel's battery.

The present invention achieves the above objects by making a system as disclosed above, in which there are means for detecting the voltage of the power source and/or of the current absorbed by said exploitation system.

There is further provided a first control unit comprising first switch means configured to activate/deactivate the connection of the first transmission means to the power source.

In addition, the switch means are operated on the basis of the value detected by the detection means.

The detection means can therefore identify voltage values at the level of the power source and/or values of current absorbed by the exploitation system.

These modes can be provided alternatively or in combination.

In case of detection of the current absorbed by the exploitation system, it is possible to set a threshold value in the first control unit, so that the first control unit activates the switch means in case the current absorbed by the exploitation system falls below the threshold value.

This configuration also makes it possible to make a safety system, in such a way that too high current absorptions are not envisaged, which could be due to a failure of the components or a malfunction of the system.

In fact, in the event of malfunction or short circuits, the detection of "abnormal" values involves interrupting the connection between the steering wheel and the power source, safeguarding the integrity of the steering wheel itself and its components.

According to a preferred embodiment variant, the detection means are aimed at identifying the voltage values at the ends of the power source.

Based on what has been disclosed, it is evident that the first control unit can be provided both at the steering wheel level and at the dashboard or wheelhouse level.

Advantageously, according to this variant, the first control unit sets a voltage threshold value below which it activates the switch means, so as to interrupt the transmission of energy from the power source to the first and/or second transmission means. The voltage threshold value identifies the state of the battery, i.e. it indicates whether the battery is being charged, for example through the alternators of the propulsion engines, or whether the battery is not being charged.

In accordance with this configuration, it is possible to set the first control unit in such a way that the energy transmission can only take place in the event that the battery is being charged, so that this transmission will not excessively discharge the battery, which can be used for main services, such as starting propulsion engines.

The same operation occurs in the event that the first and second transmission means are connected to an auxiliary battery, which, in any case, would in turn be connected to the main battery of the vessel.

It follows that the energy transmission system subject-matter of the present invention may be inactive in the event that the battery is not being charged, preserving it from unwanted discharges.

Alternatively, it is possible to detect the voltage at the ends of the battery and set the first control unit to allow in any case the transmission of electrical energy, from the battery to the exploitation system.

Advantageously, the switch means are interposed between the first control unit and the first transmission means, so that, if the switch means are activated, the first control unit can always be powered, i.e. remain in standby, but absorbing a minimum current value, as the exploitation system will be disconnected.

From what has just been disclosed, it is evident that the system subject-matter of the present invention, from a generic point of view, allows to transmit electric current from a fixed part integral with the dashboard of the vessel, to a movable part, integral with the steering wheel, in order to use this electric current also as information transport.

Therefore, the exploitation system can consist of any electronic device, such as a display aimed at displaying any information.

This solution makes it possible to transform the steering wheel into a smart steering wheel, i.e. it has on-board electronics that allow a user to interact with one or more components of the vessel.

According to a possible embodiment, the transmission system subject-matter of the present invention is used to make a heated steering wheel.

In particular, the exploitation system is configured to heat the handle of the steering wheel using the transmitted electric current.

The exploitation system preferably comprises at least a first resistive element consisting of a wire, which extends along at least part of the length of the handle of the steering wheel.

The resistive element, traversed by the current transmitted by the power source, heats up and emits heat that is transmitted to the handle, heating it.

According to a further embodiment, there is a second control unit interposed between the second transmission means and the exploitation system.

Both the first and the second control unit can be made in the form of electronic boards with microprocessors.

Further, the first and second control unit may be integrated within a single control board.

The presence of the second control unit allows to make the transmission system particularly adaptable to different configurations, since, in addition to providing heating to the handle of the steering wheel, it can handle additional electronic devices, such as a display.

The electric current of the power source is a direct current, which can be transformed into alternating current by the first or second control unit.

In the case of a transmission of electrical energy through induction, once it is transmitted from the first to the second transmission means, the current is then transformed again into direct current by the second control unit, so that all electronic devices working in direct current can be connected to the second control unit.

In fact, the transformation from alternating current to direct current at the steering wheel level has particular advantages in the event that the transmission means consist of electromagnetic transmission means.

For example, it is possible to provide that the first transmission means and the second transmission means consist of two coils that transmit current through an electromagnetic effect.

The presence of two coils allows to obtain unlimited turns of the steering wheel, without the risk of entanglement of wires.

In this case, the possibility of working in direct current at the level of the steering wheel is particularly advantageous, since the alternating current could create electromagnetic disturbances.

In addition, as will be disclosed later, the second control unit allows to implement controls and adjustments regarding the possibility of heating the handle of the steering wheel.

For example, according to one embodiment, the exploitation system comprises a second resistive element consisting of a wire, which extends along at least part of the length of the handle of the steering wheel.

The first and second resistive element are connected in parallel and can be controlled by the second control unit.

The first and second resistive element can be used alternatively or in combination, so as to modify the heating of the handle of the steering wheel.

For example, the second control unit may be configured for the alternating or simultaneous activation of the first and second conductive element on the basis of the voltage value detected by the voltage detection means.

According to one embodiment, the means for detecting the voltage of the power source, i.e. of the battery, can evaluate whether the system is connected to a nominal 24 Volt or 12 Volt battery.

In the case of a 24V battery, the second control unit activates both resistive elements, so as to absorb half the amount of electric current.

Alternatively, the presence of a 24V battery allows making a more performing system, which allows the handle of the steering wheel to be heated faster.

In addition to this adjustment, the presence of the second control unit makes it possible to implement safety controls relating to the heating of the handle.

In fact, the second control unit comprises means for detecting the temperature of the handle of the steering wheel and second switch means aimed at enabling/disabling the connection between the second control unit and the exploitation system, so that the second control unit can be configured to activate the second switch means upon reaching a certain temperature threshold value in the handle of the steering wheel.

The detection of the temperature of the handle has particularly advantageous aspects, as it allows the heating of the handle to be suspended even if the threshold temperature has been reached following heating due to external conditions, for example heating following solar radiation, avoiding unnecessary waste of energy.

The threshold value can be relative to a threshold value with an upper limit, i.e. a temperature value not to be exceeded, at which the heating is interrupted, as well as a threshold value with a lower limit, i.e. a minimum temperature value below which the heating must be started.

These two types of threshold values can be provided alternatively or in combination.

According to a possible embodiment, the system subject-matter of the present invention may comprise an ambient temperature sensor, i.e. a sensor configured to detect the temperature in a non-heated zone.

In this way, if the ambient temperature is very low, it is possible to decide to heat the steering wheel, regardless of the established threshold values.

According to an improvement of the variant just disclosed, it is possible to envisage modifying the threshold values based on the values of the ambient temperature.

In this case, preferably, the first and/or the second control unit provide associative tables between the values of the threshold values and the values of the ambient temperature.

In fact, it is not always true that the lower the ambient temperature, the more the steering wheel is to be heated, as it is a subjective evaluation, which varies based on users' preferences.

Advantageously, the system subject-matter of the present invention comprises means for enabling the first control unit.

As will be evident from the illustration of some executive examples, these enabling means can be integrated into the ignition system of the vessel, making a "subkey" system that can be activated only in the case of ignition of the vessel.

As disclosed above, according to a possible embodiment variant, the transmission means may consist of electromagnetic induction means.

According to a preferred embodiment, the transmission means consist of a system with sliding contacts.

The system with sliding contacts can be positioned in any way between the first and second part.

For example, it is possible to provide sliding contacts placed radially with respect to the axis of rotation of the steering wheel.

However, preferably, the first and second transmission means consist of two or more conductive tracks arranged on planes parallel to each other and perpendicular to the axis of rotation of the steering wheel.

The conductive tracks have sliding contacts configured to put into contact the conductive tracks placed on parallel planes.

This solution makes it possible to obtain an efficient transmission of electric current, without using connection cables that can get tangled, allowing unlimited turns of the steering wheel.

In addition, the peculiar positioning of the conductive tracks allows the transmission means to be inserted into a restricted space, the space between the steering wheel and the dashboard of the vessel, as required by current regulations.

According to an improvement aimed at optimizing the transmission of electric current from the first to the second transmission means, the sliding contacts consist of a plurality of lamellae that extend from a conductive track to the corresponding facing conductive track, the lamellae being alternately oriented according to different directions.

This configuration allows to always have the same number of tabs that put into contact one conductive track and the other, regardless of the direction of rotation of the steering wheel, optimizing the transmission from the first to the second transmission means.

As will be disclosed below, the system subject-matter of the present invention may provide a plurality of controls, placed on the dashboard of the vessel and/or on the steering wheel, for setting the operation of the first and/or second control unit.

For example, it is possible to provide a button for setting one or more temperature threshold values of the handle of the steering wheel.

In the case of two resistive elements, the second control unit could be configured to activate both resistive elements up to a first temperature threshold value, and then activate only one until a second threshold value is reached, and then deactivate both of them.

Finally, it should be specified that, regardless of how the transmission means are made, the power source is connected to the first transmission means through electrical connection cables.

Furthermore, even if the first part of the system is mounted integral with the dashboard of the vessel and even if the second part of the system is mounted integral with the steering wheel of the vessel, the packing of the components of the system causes a drag force between the second part and the first part during the rotation of the steering wheel.

It follows that the first part tends to have a relative rotation with respect to the dashboard, while the second part tends to have a relative rotation with respect to the steering wheel.

It is essential to avoid this rotation, as it could damage the electrical connection cables due to the mechanical tension generated.

To solve this problem, advantageously, the system subject-matter of the present invention has means for locking the first part to the pilot bridge of the vessel.

In a similar way, it is possible to provide means for fixing the second part to the hub of the steering wheel.

Finally, according to a further embodiment, the system subject-matter of the present invention has a communication unit configured to transmit to operators and/or users, the operating values of the system itself.

This functionality can be used for example for diagnostic purposes.

Alternatively or in combination, this functionality can be used to allow the user to configure the operation of the steering wheel, for example through a modification of the threshold values disclosed above.

In this case, it is possible to provide a special application on a user device, such as a smartphone or the like, in order to create an interface for modifying the operation of the steering wheel.

These and other features and advantages of the present invention will become clearer from the following disclosure of some exemplary embodiments illustrated in the accompanying drawings in which:
figure 1 illustrates an exemplary principle diagram of a possible embodiment of the energy transmission system subject-matter of the present invention;
figure 2 illustrates a flowchart aimed at illustrating the operation of the system subject-matter of the present invention;
figures 3a and 3b illustrate two exploded views of a possible embodiment of the system subject-matter of the present invention, with particular reference to the fixing means of the first and second part;
figures 4a to 4c illustrate three views of a possible embodiment of the transmission means belonging to the transmission system subject-matter of the present invention.

It is specified that the figures appended to this patent application illustrate only some possible embodiments of an energy transmission system for vessels subject-matter of the present invention, to better understand the advantages and characteristics disclosed.

These embodiments are therefore to be understood as purely illustrative and not limiting to the inventive concept of the present invention, namely that of making an energy transmission system that can be installed efficiently on board vessels, avoiding that the aggressive environment impairs their operation and without compromising the charging quality of the vessel's battery.

In particular, the appended figures relate to the creation of a transmission system for making a heated steering wheel, but, as anticipated, the transmission system subject-matter of the present invention allows the transmission of electric current between a fixed part and a rotationally mounted steering wheel, so as to bring electrical energy and data on board the steering wheel, in order not only to be able to heat it, but also to transmit an intelligence at the level of the steering wheel.

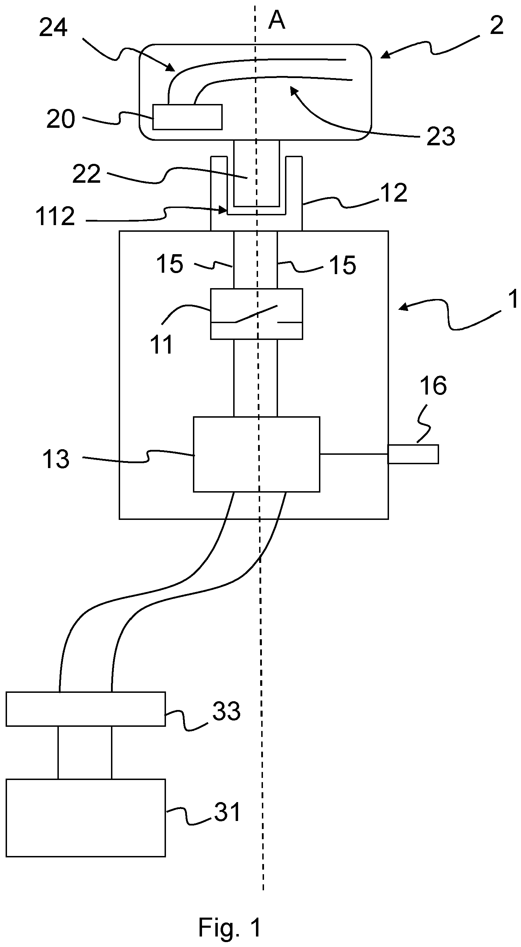

With particular reference to figure 1, a principle diagram of a possible embodiment of the transmission system subject-matter of the present invention is illustrated.

Figure 1 represents a steering wheel for vessels comprising a handle 2 mounted rotatable around an axis A.

The steering wheel for vessels is shown schematically in figure 1, in order to illustrate the components, but it is clear that it can be made in any of the ways known to the state of the art.

Regardless of how the steering wheel is made, the system subject-matter of the present invention comprises a first part 12 mounted integral with the dashboard 1 of the vessel and a second part 22 mounted integral with the steering wheel.

The system subject-matter of the present invention is connected to a power source, such as the battery 31.

The battery 31 may be the battery of the vessel, or preferably, if available, an auxiliary battery of the vessel.

The system subject-matter of the present invention allows to transmit electric current from the battery 31 to the handle 2 of the steering wheel of the vessel thanks to the presence of first transmission means, provided on the first part 12, which cooperate with second transmission means, provided on the second part 22.

The first transmission means are connected to the battery 31, so as to transmit the electrical energy to the second transmission means and in such a way that this electrical energy can be exploited by an exploitation system, which will be disclosed later.

According to the embodiment illustrated in figure 1, between the battery 31 and the first transmission means there are interposed a control unit 13, means for detecting 33 the voltage of the battery 31, and first switch means 11 configured to activate/deactivate the connection of the first transmission means to the battery 31.

The first control unit 13 is configured to communicate with the detection means 33 so as to identify the voltage value of the battery 31.

It follows that the control unit 13 can be provided integrated within the first part 12 and/or within the second part 21.

Preferably, the control unit 13 is set with a certain threshold value of the voltage of the battery 31, so that, if the voltage of the battery 31 is lower than the threshold value, the control unit 13 activates the switch means 11 so as to interrupt the connection 15 and so that the first part 12, and the first transmission means, are disconnected from the battery 31, avoiding consuming current from the battery 31.

Conversely, if the voltage value of the battery 31 detected by the detection means 33 is higher than the threshold value, the control unit 13 deactivates the switch means 11, i.e. restores the connection 15 and the electric current will be transmitted from the battery 31 to the first transmission means and, consequently, to the exploitation system via the second transmission means.

Preferably, as illustrated in figure 1, there are means for enabling the control unit 13.

These enabling means are indicated with number 16 in figure 1 and can for example consist of a command of the vessel ignition key type.

Thus, the enabling, or activation, of the control unit 13 is integrated in the vessel ignition.

At the same time as the vessel ignition key is operated in the dashboard 1, the control unit is switched on, so that it can detect the voltage at the ends of the battery 31 and activate/deactivate the switch means 11, as disclosed above.

The switch means 11 are interposed between the control unit and the first transmission means so that the control unit 13 can always be active, regardless of the voltage present at the ends of the battery 31.

As disclosed above, the system subject-matter of the present invention allows to transmit electrical energy from the battery 31 to the handle 2 of a steering wheel for vessel, which energy can be exploited by the exploitation system for the most disparate activities, such as for example the power supply of a display or further commands at the steering wheel level.

For this reason, according to an implementation variant, the system subject-matter of the present invention provides a second control unit 20 connected to the second energy transmission means.

According to the variant illustrated in figure 1, the system subject-matter of the present invention is configured for making a heated steering wheel.

For this reason, the exploitation system comprises a first 23 and a second 24 resistive element, both consisting of a wire which extends along at least part of the length of the handle 2 of the steering wheel.

The electrical energy of the battery 31 therefore travels along the first 23 and/or the second 24 resistive element, in such a way that the resistance offered by the elements 23 and 24 emits heat, which can heat the handle.

The wires constituting the first 23 or the second 24 resistive element can be positioned in any way, based on operational needs.

They can, for example, develop linearly along the handle 2, or they can be wound helically along the handle 2.

Furthermore, from what has been disclosed, it is clear that in order to make a heated steering wheel, the presence of neither the second control unit 20, nor of the two resistive elements is required, only one resistive element is necessary.

It is obviously possible to provide control buttons, on the steering wheel and/or on the dashboard 1, which can activate the heating.

In this case, these buttons act directly on the control unit 13, so as to start the heating process.

The presence of the two resistive elements 23 and 24 allows to heat the handle 2 of the steering wheel according to two temperature levels, so that the two elements 23 and 24 can be activated independently and simultaneously or alternatively to provide different heating levels.

According to a possible embodiment, the second control unit 20 comprises means for detecting the temperature of the handle 2.

The control unit 20 can be set with a temperature threshold value, so that, when this value is reached, the control unit 20 blocks the heating.

The control unit 20 can disconnect the first and/or the second resistive element, or can communicate to the first control unit 13 which provides for the activation of the switch means 11.

Since the control unit 13 and/or the control unit 20 can be programmed by software, it is possible to envisage different operations of the system subject-matter of the present invention, different control tasks for the activation/deactivation of the different components.

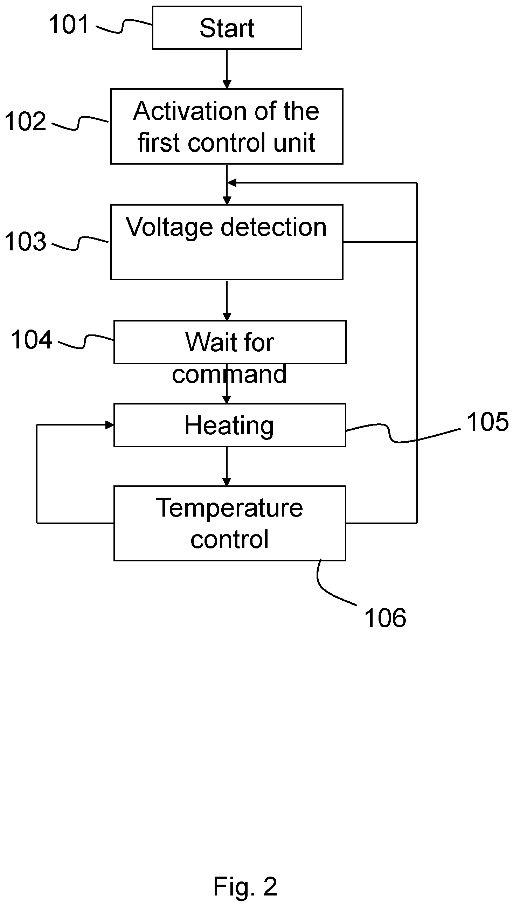

Figure 2 illustrates a block diagram of a possible generic operation of the system subject-matter of the present invention.

Referring to figures 1 and 2, the system is started, step 101, for example by igniting the vessel.

The battery 31 is then activated, which powers and activates the first control unit 13, step 102.

The control unit 13 detects, through the detection means 33, the voltage at the ends of the battery 31, step 103, and compares the detected value with the threshold value.

If the detected value is lower than the threshold value, it is returned to the previous step, the control unit 13 remains in standby, waiting for the detected voltage value to be greater than the threshold value.

If the voltage value is greater than the threshold voltage value, the system waits for a command from the user, step 104, that is, in the illustrated variant, it waits for the user to decide whether to heat the handle of the steering wheel.

It may be provided for the system to perform two or more voltage checks.

At this point the user sets the heating command, step 105: the control unit 13 activates the switch means 11 and the current is transmitted to the resistive elements 23 and 24, which heat up and transmit the heat to the handle 2.

Finally, a temperature control step 106 is provided: until the handle reaches the threshold temperature value, the system continues to heat up, step 105.

When the threshold temperature value is reached, current transmission will be disabled.

According to a preferred embodiment, in this case the control unit 20 disconnects the connection with the first 23 and/or the second 24 resistive element, but remains active in temperature monitoring.

In this way, if the temperature falls below the threshold value, the control unit 20 can warn the control unit 13, which, if there are acceptable voltage values, reactivates the heating.

It is obviously possible to provide light elements aimed at alerting the user of the operating conditions of the system, as well as of any emergency situations, battery voltage level too low or handle temperature too high, or the like.

Such light elements are preferably commanded by the control unit 13.

Based on what has been disclosed and with particular reference to figure 1, it is evident that the first and second transmission means must guarantee the transmission of the electrical signal allowing an infinite number of turns of the steering wheel around the axis A.

Furthermore, for reasons of a constructive nature, the first and second transmission means must be positioned between the first 12 and the second part 22, in a particularly restricted space.

For this reason, preferably, the first and second transmission means consist of two pairs of conductive tracks arranged on planes parallel to each other and perpendicular to the axis of rotation A of the steering wheel.

The two pairs of conductive tracks are positioned between the first portion 12 and the second portion 22 in the gap 112.

Then there are provided sliding contacts configured to put into contact the conductive tracks placed on parallel planes.

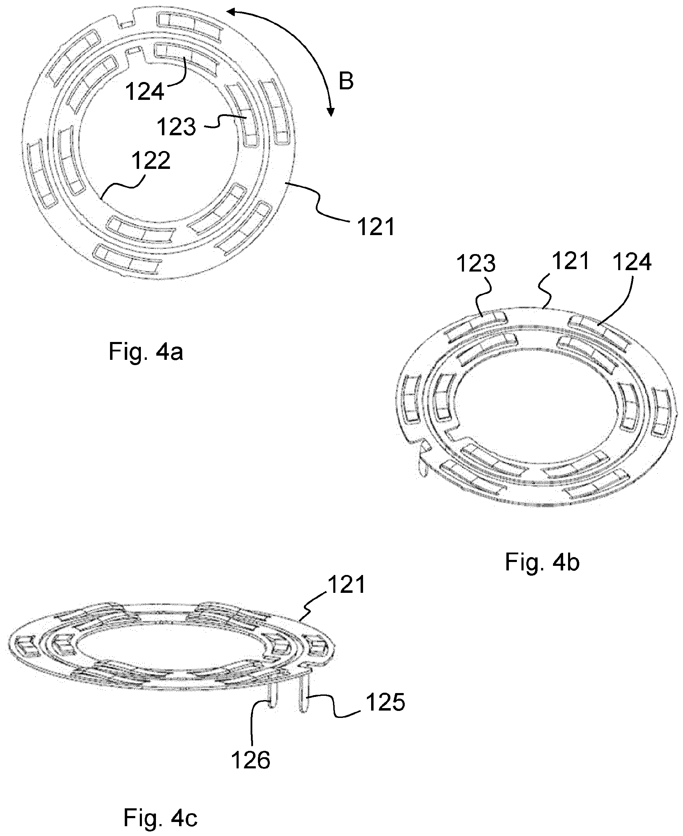

Figures 4a to 4c illustrate a possible embodiment of such conductive tracks, in particular of a single pair of conductive tracks, i.e. that with the sliding contacts.

With particular reference to these figures, the conductive tracks are formed by two annular elements 121 and 122, arranged concentric to each other.

Both the annular elements 121 and 122 have sliding contacts consisting of tabs 123 and 124 which are obtained with the metal layer constituting the annular elements 123 and 124.

The tabs are arranged on incident planes with respect to the plane of the annular elements 121 and 122 precisely to allow the annular elements themselves to be in contact with corresponding annular elements placed parallel to the annular elements 121, 122.

Therefore, the tabs 123 and 124 will be with one end fixed to the annular elements 121 and 122 and with the other end (the free end) will slide along the surface of the annular elements above, in order to allow contact by sliding during the rotation of the steering wheel.

As illustrated in figures 4a to 4c, a plurality of tabs 123 and 124 placed on the surface of the annular members 121 and 122 is provided.

The lamellae 123 are all oriented in the same direction, the same inclination, but in a different direction with respect to the lamellae 124.

It follows that the lamellae 123 and 124 lie on planes inclined with respect to the planes of the annular elements 121 and 122 and that they are convergent with each other.

In this way, the number of lamellae in sliding contact between the conductive tracks will always be the same, regardless of the direction of rotation B of the steering wheel.

The annular elements 121 and 122 have elements for connection 125 and 126 to the switch means 11 and to the control unit 13.

Therefore, the annular elements 121 and 122 illustrated in the figures constitute the first transmission means, while the second transmission means will consist of further smooth annular elements, without tabs, placed above and parallel to the annular elements 121 and 122.

It is clearly also possible to provide for the specular variant, i.e. the annular elements 121 and 122 of figures 4a to 4c that constitute the second transmission means.

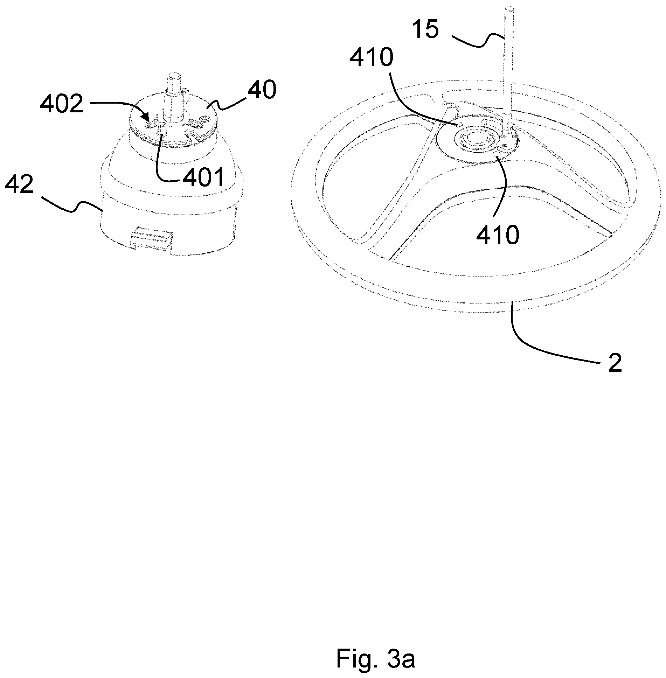

Figure 3a illustrates a possible embodiment of the means for locking the first part to the pilot bridge of the vessel.

Number 15 indicates the cable of connection from the battery to the first transmission means, supported by a first bracket 42 mounted fixed with respect to the wheelhouse 42 and the steering wheel 2 being rotatable with respect to said first bracket 42.

It is specified that number 42 indicates the wheelhouse, integral with the dashboard, which may have devices such as tilts, hydraulic pumps or similar devices, known to the state of the art and commonly used in wheelhouses known to the state of the art.

There is also a second bracket 40, mounted integral with the wheelhouse 42 provided with two pins 401, preferably made in piece with the bracket 40.

The bracket 40 is fixed to the wheelhouse 42 by means of three screws 402 that cooperate with corresponding housing seats present on the wheelhouse 42.

The steering wheel 2 in the lower part is provided with two holes 410 engaging the two pins 401.

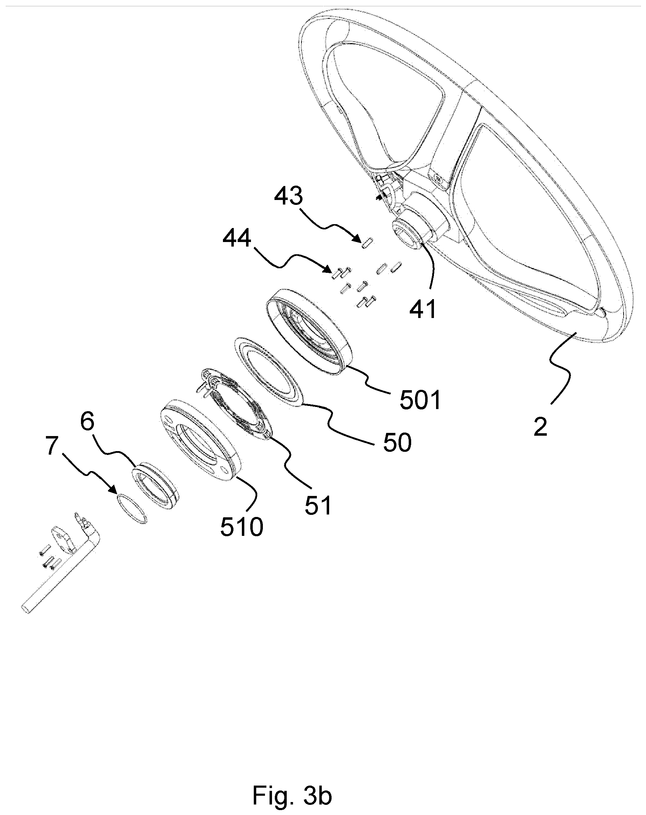

Figure 3b illustrates a possible embodiment of the means for fixing the second part to the hub 41 of the steering wheel 2.

In particular, the hub 41 can be fixed to the structure of the steering wheel 2 by means of a nut and a male/female coupling that prevents relative rotation, although the packing given by the tight nut would already be sufficient.

References 50 and 51 illustrate the conductive tracks aimed at making the transmission means, disclosed above, in relation to figures 4a-4c.

These conductive tracks are inserted into two housing boxes, 501 and 510, respectively.

There are also three pins 43 which are inserted in three corresponding holes present in the hub and in three holes present in the housing box 501, thus preventing rotation between the housing box 501 and the hub 41.

In accordance with this configuration, the hub 41, the pins 43, the housing box 501 and the track 50 rotate integrally with the steering wheel 2, while the remaining components of figure 3b, i.e. the track 51 and the housing box 510 are fixed with respect to the vessel.

At an axial level, the movement of the components is blocked by using an element 6 consisting of a cap whose shape is such that it cannot pass through the housing seat 510, so as not to pass beyond it.

The elastic ring 7 engages on the groove on the hub 41, preventing the element 6 from slipping off. As a result, everything else is prevented from moving axially.

Alternatively, the axial locking can be obtained through the further components illustrated in figure 3b.

Six screws 44 are used and are screwed onto the element 6, packing the system, while the elastic ring 7 can be used to prevent the rotating module from falling.

While the invention is susceptible to various modifications and alternative constructions, some preferred embodiments have been shown in the drawings and disclosed in detail.

It should be understood, however, that there is no intention to limit the invention to the specific illustrated embodiment but, on the contrary, the aim is to cover all the modifications, alternative constructions and equivalents falling within the scope of the invention as defined in the claims.

The use of "for example", "etc.", "or" indicates non-exclusive alternatives without limitation, unless otherwise indicated.

The use of "includes" means "includes but is not limited to", unless otherwise stated.

## Claims

1. System for the transmission of energy and data for vessel steering wheels, comprising a first part (12) mounted integral with the dashboard (1) of the vessel and a second part (22) mounted integral with the steering wheel, said first part (21) comprising first transmission means connected to a power source (31) mounted on board the vessel,
the second part (22) comprising second transmission means connected to a system for exploiting the energy and data transmitted,
the first and second transmission means being configured to transmit the electric current from the power source (31) to the exploitation system,
**characterized in that**
there are means for detecting (33) the voltage of the power source (31) and/or of the current absorbed by said exploitation system,
there being provided a first control unit (13) comprising first switch means (11) configured to activate/deactivate the connection of the first transmission means to the power source (31), which switch means (11) are operated on the basis of the value detected by the detection means (33).

2. System according to claim 1, wherein said exploitation system comprises at least a first resistive element (23) consisting of a wire, which wire extends along at least part of the length of the handle (2) of the steering wheel.

3. System according to claim 1 or claim 2, wherein there is a second control unit (20) interposed between the second transmission means and the exploitation system.

4. System according to one or more of the preceding claims, wherein said exploitation system comprises a second resistive element (24) consisting of a wire, which wire extends along at least part of the length of the handle (2) of the steering wheel.

5. System according to claim 3, wherein said second control unit (20) comprises means for detecting the temperature of the handle (2) of the steering wheel and second switch means aimed at enabling/disabling the connection between the second control unit (20) and the exploitation system, the second control unit (20) being configured to activate the second switch means upon reaching a certain temperature threshold value in the handle (2) of the steering wheel.

6. System according to one or more of the preceding claims, wherein said second control unit (20) is configured for the alternating or simultaneous activation of the first (23) and second (24) conductive element on the basis of the voltage value detected by said voltage detection means (33).

7. System according to one or more of the preceding claims, wherein there are enabling means (16) of the first control unit (13).

8. System according to one or more of the preceding claims, wherein the first and second transmission means consist of two or more conductive tracks (121, 122) arranged on planes parallel to each other and perpendicular to the axis of rotation (A) of the steering wheel, the conductive tracks (121, 122) having sliding contacts configured to put the conductive tracks placed on parallel planes into contact.

9. System according to claim 8, wherein said sliding contacts consist of a plurality of tabs (123, 124), which extend from a conductive track to the corresponding facing conductive track, said tabs (123, 124) being alternately oriented according to different directions.

10. System according to one or more of the preceding claims, wherein there is a button for setting one or more temperature threshold values of the handle of the steering wheel.

11. System according to one or more of the preceding claims, wherein there are means for locking the first part (12) to the pilot bridge of the vessel.

12. System according to one or more of the preceding claims, wherein there are means for fixing the second part (22) to the hub of the steering wheel.
